# FASCICULE DE BREVET EUROPEEN

(11) **EP 3 761 779 B1**
(45) Date de publication et mention de la délivrance du brevet: **27.03.2024**
(21) Numéro de dépôt: 18840031.1
(22) Date de dépôt: 18.12.2018
(51) Int. Cl.: A01G 9/02, E04B 1/58

(54) **STRUCTURE ÉLASTIQUE ET PROCÉDÉ DE MISE EN PLACE CORRESPONDANT**
ELASTISCHE STRUKTUR UND ENTSPRECHENDES MONTAGEVERFAHREN
ELASTIC STRUCTURE AND CORRESPONDING INSTALLATION METHOD

(30) Priorité: 20.04.2018 FR 1853484
(43) Date de publication de la demande: 13.01.2021
(73) Titulaire: Ecole Nationale des Ponts et Chaussées, 77455 Marne La Vallee Cedex 2 (FR)
(72) Inventeur: BAVEREL, Olivier, 38950 SAINT MARTIN LE VINOUX (FR); FERAILLE, Adélaïde, 92000 NANTERRE (FR); TAYEB, Frédéric, 93220 GAGNY (FR); CRAVERO, Julien, 75012 PARIS (FR); TCHIGUIRINSKAIA, Loulia, 75004 PARIS (FR); VERSINI, Pierre-Antoine, 77590 BOIS LE ROI (FR); CARON, Jean-François, 78220 VIROFLAY (FR); MESNIL, Romain, 75011 PARIS (FR)
(74) Mandataire: Brevalex
(86) Numéro de dépôt international: PCT/FR2018/053379
(87) Numéro de publication internationale: WO 2019/202219

(56) Documents cités:
- DE-U1- 8 809 627
- FR-A5- 2 149 711
- GB-A- 2 187 254
- GB-A- 2 282 177
- RU-C2- 2 622 571
- US-A- 425 745
- US-A- 3 352 582
- Anonymous: "Gardens by the Bay - Wikipedia", , 1 février 2019 (2019-02-01), XP055555597, Extrait de l'Internet: URL:https://en.wikipedia.org/wiki/Gardens_ by_the_Bay#Supertree_Grove [extrait le 2019-02-12]

## Description

La présente invention concerne une structure comportant un maillage de tiges ayant une forme évasée se rapprochant des formes divulguées par les documents DE 88 09 627 U1 et US0425745A.

La présente invention se rapporte plus particulièrement à une structure réalisée au moyen d'un maillage de tiges élastiques, et à un procédé de mise en place d'une telle structure.

Plus précisément, ce maillage de tiges élastiques est du type « gridshell élastique ».

Dans la littérature scientifique, on peut notamment se référer à la thèse de Lina Bouhaya, publiée par l'université Paris-Est en 2010, dont l'abrégé rappelle la définition d'un gridshell :
*«Le terme gridshell désigne une coque discrète qui est obtenue par déformation élastique d'une grille bidirectionnelle continue plane sans rigidité en cisaillement puis rigidifiée par une troisième direction de barres. Ainsi défini, un gridshell a un potentiel structural intéressant et peut répondre à des exigences architecturales complexes. »*

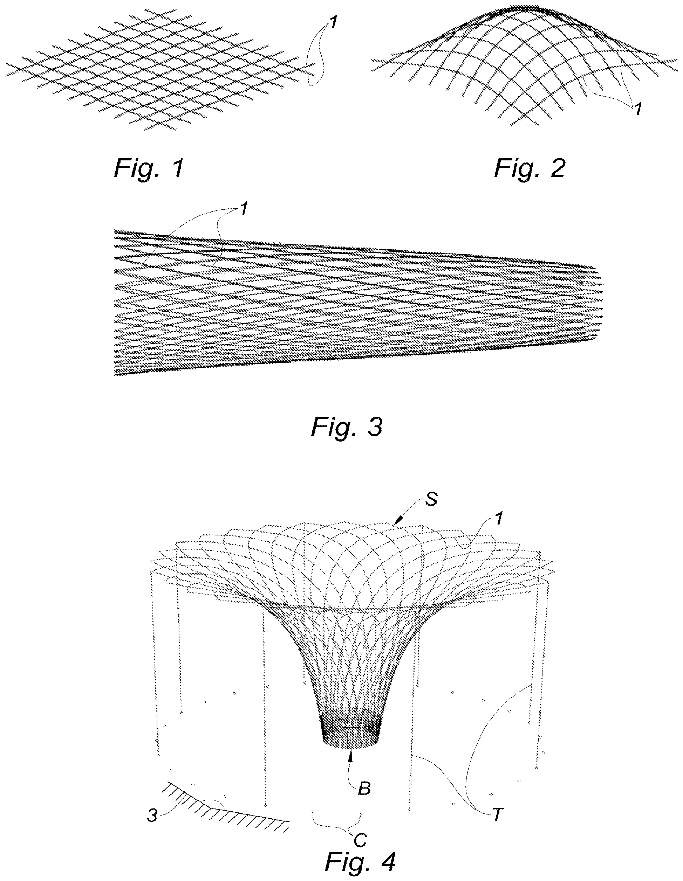

Un tel gridshell élastique est obtenu au moyen de tiges 1 élastiquement déformables, disposées initialement selon un maillage plan, comme cela est représenté sur la figure 1.

Ces tiges déformables sont reliées entre elles par des moyens de liaison autorisant une variation des angles formés entre ces tiges, sans glissement et sans effort de cisaillement dans le plan du maillage : un tel maillage plan est connu dans la littérature scientifique notamment sous la désignation de maillage de Tchebychev, mais des maillages présentant les caractéristiques susmentionnées (variation des angles entre les tiges sans glissement et sans efforts de cisaillement) peuvent être réalisés avec d'autres maillages que des maillages de Thebychev.

Dans ce qui suit, on désignera par « maillage du type de Tchebychev » l'ensemble de ces maillages.

En agissant sur certains points de ce maillage, on peut passer de la structure plane représentée à la figure 1, à la structure tridimensionnelle représentée à la figure 2.

Lors de cette déformation, les angles formés entre les tiges varient, de sorte que les carrés du maillage représentés à la figure 1, deviennent des losanges gauches (ou plus précisément des paraboloïdes paraboliques) dans le cas de la structure en trois dimensions de la figure 2 (ces carrés et losanges gauches étant définis par le terme générique « quadrangles » dans ce qui suit).

Lorsqu'on souhaite conserver la forme tridimensionnelle de la figure 2, on doit contreventer le réseau en fixant par exemple des cerclages, entretoises ou câbles additionnels sur les tiges formant le maillage, ayant pour effet de figer certains des quadrangles du maillage dans leur configuration déformée.

Lorsque les efforts appliqués aux tiges, permettant de les maintenir dans la configuration de la figure 2, (grille non contreventée) sont supprimés, la structure revient dans sa forme plane de la figure 1, grâce à l'élasticité du matériau formant les tiges.

Le matériau formant les tiges déformables peut-être un composite, tel qu'un composite à matrice polymère renfermant des fibres de verre, fabriqué par exemple par pultrusion.

La présente invention a notamment pour but d'exploiter ces caractéristiques des gridshells élastiques, pour réaliser une structure innovante, pouvant avoir des applications en particulier dans le domaine de la construction ou du mobilier urbain.

On atteint ce but de l'invention avec une structure tridimensionnelle selon la revendication 1: une telle structure présente une forme en corolle très esthétique, permettant notamment de créer des zones ombragées si elle est complétée par une couverture, classique ou végétale

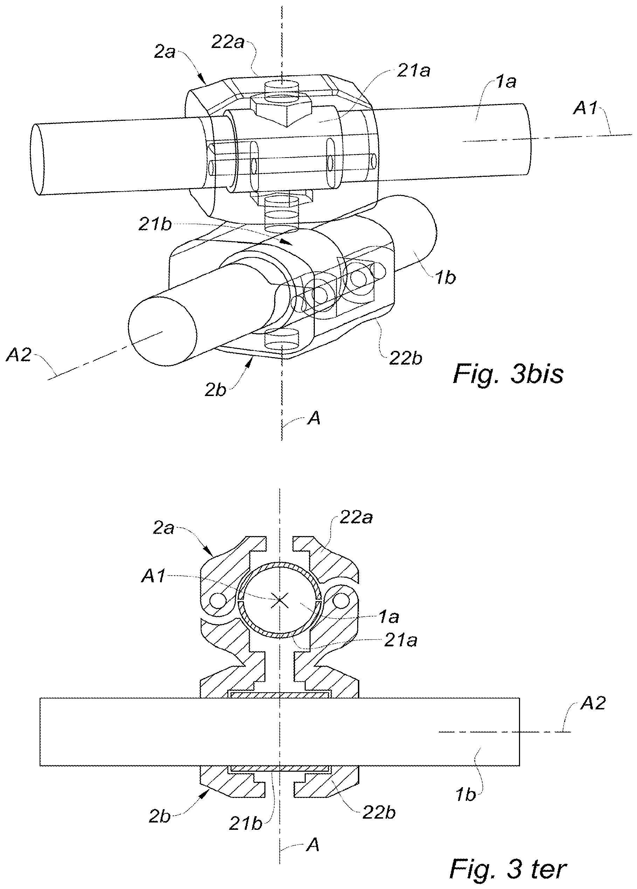

Dans le cadre de la présente invention, le terme « tubulaire » désigne non seulement une forme tubulaire simple telle que représentée sur la figure 3 ci-jointe, mais aussi plus généralement toute topologie de maillage refermé sur lui-même, définissant donc un volume fermé.

La présente invention concerne également un groupe de structures conformes à ce qui précède, ces structures étant reliées entre elles dans leurs zones

de plus grande envergure : un tel groupe de structures permet d'augmenter la surface de la zone ombragée.

La présente invention concerne également un ensemble comprenant une structure ou un groupe de structures conformes à ce qui précède, présentant chacune une forme s'évasant de sa base vers sa partie supérieure, et un bloc dans lequel ladite base est ancrée, le poids de ce bloc peut être suffisant pour assurer à lui seul la stabilité de ladite structure par rapport au sol, ou aidé partout type d'ancrage léger additionnel: cet agencement permet de maintenir de manière très simple la ou les structures en position verticale, avec un minimum d'emprise au sol.

Suivant des caractéristiques optionnelles de cet ensemble :
- ledit bloc est un bac contenant de la terre, et ladite structure ou lesdites structures est (sont) recouverte(s) de végétaux prenant racine dans ce bac : cet agencement permet de végétaliser une structure selon l'invention, ce qui est à la fois esthétique et générateur d'ombre : une telle végétalisation permet de fournir de nombreux services éco-systémiques, tels que :
   - services de production (production de matières premières, agriculture urbaine et rétention d'eau),
   - services de régulation (régulation de la qualité de l'air, du climat local, du climat global par la création de rafraîchissement et d'îlots de fraicheur),
   - services culturels (esthétisme, éducation de la biodiversité).
- ledit bac comprend un réservoir d'eau, et des capteurs permettant une maintenance connectée. Une pompe solaire peut compléter le dispositif.
- ladite structure ou lesdites structures peut (peuvent) être recouverte(s) au moins partiellement de plaques choisies dans le groupe comprenant des panneaux photovoltaïques et des toiles formant ombrage : cette option permet d'utiliser une structure selon l'invention comme îlot générateur d'électricité, et/ou comme élément formant ombrage.

La présente invention concerne également une structure tridimensionnelle conforme à ce qui précède, comprenant des dispositifs de liaisons des tiges, dans laquelle chaque dispositif de liaison des tiges permet la libre rotation de chaque tige autour de son axe, à l'intérieur du dispositif (pour éviter les efforts de torsion) et qui permet un angle libre et quelconque entre les tiges (déformation des quadrangles).

Un tel dispositif peut ainsi comprendre deux noix comprenant chacune une bague destinée à être collée sur une tige, et un corps monté rotatif autour de cette bague, les deux noix étant par ailleurs montées pivotantes l'une par rapport à l'autre autour d'un axe, coupant les axes respectifs des bagues.

La présente invention se rapporte également à un procédé de mise en place d'une structure conforme à ce qui précède, dans lequel on apporte ladite préforme tubulaire sur le lieu de mise en oeuvre, puis on applique à cette préforme les déformations permettant d'atteindre la forme évasée finale souhaitée.

Ce procédé permet de préparer la préforme tubulaire en usine, puis d'installer très rapidement la structure sur le site choisi.

Suivant des caractéristiques optionnelles de ce procédé :
- on relie la partie supérieure de ladite préforme au sol par des tirants de manière à maintenir la forme évasée de la structure pendant la mise en place desdits cerclages et/ou entretoises/câbles: ces tirants permettent de donner à la structure la forme souhaitée en attendant la mise en place des cerclages et/ou entretoises/câbles ;
- on appuie ladite préforme tubulaire sur le sol de manière que sa partie évasée soit posée sur le sol, puis on met en place lesdits cerclages et/ou entretoises et/ou câbles, puis on retourne la structure de sorte que sa partie évasée soit située vers le haut : cette alternative permet de conférer de manière simple à la structure la forme souhaitée ;
- on ancre la base de ladite structure à l'intérieur d'un bloc suffisant pour assurer à lui seul la stabilité de la structure par rapport au sol, et on complète éventuellement par un ancrage léger au sol : cet ancrage permet d'assurer de manière très simple le maintien de la structure en position verticale.

D'autres caractéristiques et avantages de la présente invention apparaîtront à la lumière de la description qui va suivre, et à l'examen des figures ci-annexées, dans lesquelles :
- les figures 1 et 2 représentent un élément de gridshell, dont le principe de déformation de la configuration de la figure 1 à la configuration de la figure 2 a été expliqué dans le préambule ci-dessus,
- la figure 3 représente une préforme de gridshell élastique tubulaire, permettant d'obtenir la structure selon l'invention illustrée sur les figures suivantes,
- les figures 3bis et 3ter illustrent un mode de réalisation d'un moyen de liaison entre les tiges du gridshell,
- la figure 4 représente en perspective la structure selon l'invention dans une étape intermédiaire de mise en place, au moyen de tirants raccordés au sol,

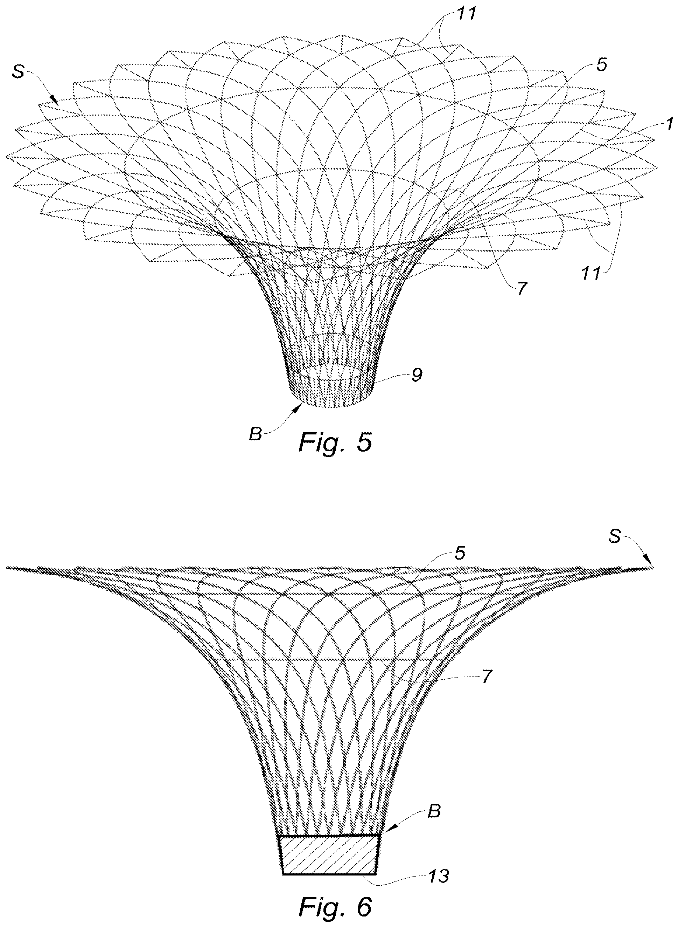

- la figure 5 représente, en perspective, la structure selon l'invention dans sa forme finale,
- la figure 6 illustre cette structure en élévation, maintenue par un socle central,

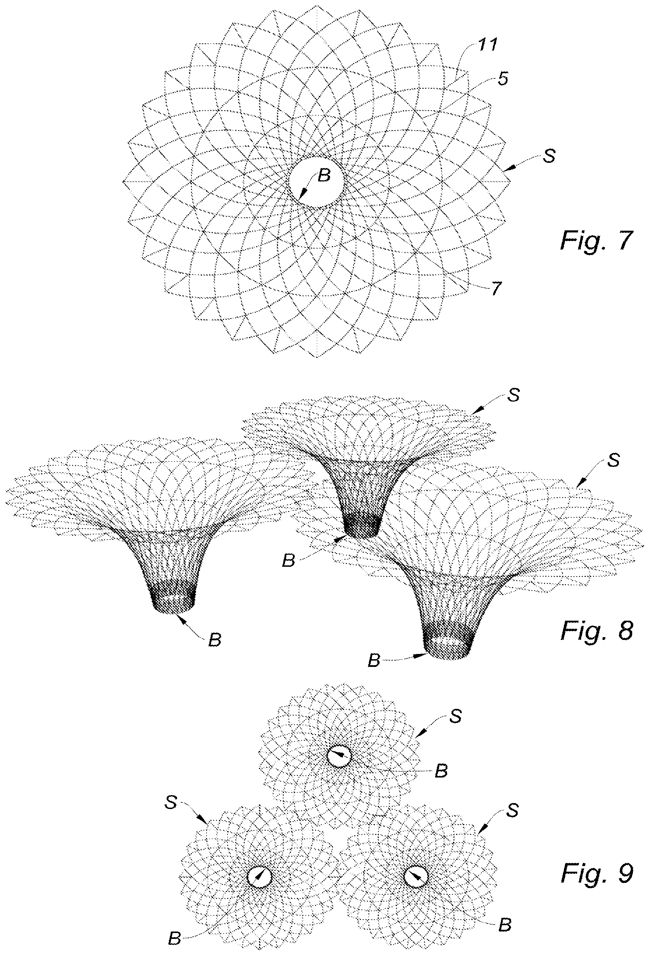

- la figure 7 illustre cette structure en vue de dessus,
- la figure 8 représente une combinaison de trois structures selon les figures 5 à 7, couplées entre elles de manière à réaliser un ensemble de plus grandes dimensions, la figure 9 est une vue de dessus de l'ensemble de la figure 8, et

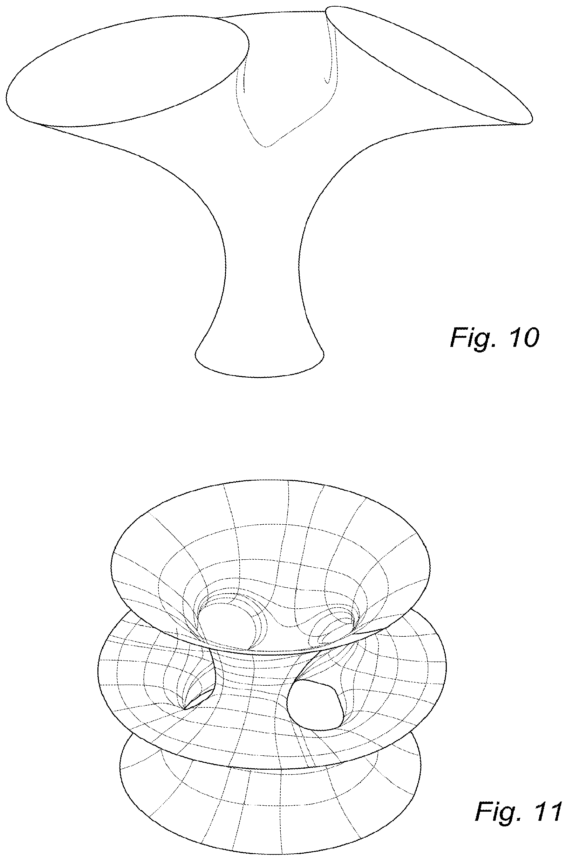

- les figures 10 et 11 sont des vues d'autre mode de réalisation possibles de structures selon l'invention.

On se reporte à présent à la figure 3, sur laquelle on a représenté une préforme en gridshell élastique, présentant une forme tubulaire, sensiblement cylindrique ou conique.

Cette préforme est réalisée à partir de tiges élastiquement déformables, reliées entre elles de manière à réaliser initialement un maillage plan du type deTchebychev, comme cela été exposé ci-dessus.

On a représenté sur les figures 3bis et 3ter un mode de réalisation possible des moyens de liaison entre les tiges 1 du maillage, autorisant une variation d'angle sans glissement entre ces tiges 1.

Comme cela est visible sur ces figures, chacune des tiges 1a, 1b est enserrée par une noix respective 2a, 2b, chacune de ces noix comprenant une bague 21a, 21b collée sur la tige 1a, 1b, et un corps 22a, 22b monté rotatif autour de cette bague 21a, 21b.

Les deux noix 2a, 2b, sont par ailleurs montés pivotantes l'une par rapport à l'autre autour d'un axe A, coupant les axes respectifs A1 et A2 des bagues 21a et 21b.

A partir de cette préforme tubulaire, on déforme le maillage de manière à obtenir la forme en corolle représentée à la figure 4.

Cette forme, qui va en s'évasant depuis la base B, vers la partie supérieure S de la structure, est obtenue au moyen d'une pluralité de tirants T reliant le bord de la partie supérieure S au sol 3.

Ces tirants peuvent comprendre par exemple des câbles métalliques, fixés au sol 3 par des crochets C.

Une fois que l'on a conféré au maillage la forme en corolle souhaitée représentée sur la figure 4, on fige cette forme par la mise en place de cerclages 5, 7, 9 fixés aux tiges 1 de la structure sans possibilité de glissement.

En d'autres termes, ces cerclages permettent de rendre indéformables les quadrangles formés par les tiges adjacentes, en définissant dans chacun de ces quadrangles deux triangles indéformables.

On obtient de la sorte un gridshell élastique, tel que défini plus haut.

De manière alternative ou complémentaire, on peut aussi fixer au sein de certains quadrangles, des entretoises ou câbles 11, rendant également ces quadrangles indéformables : dans l'exemple représenté à la figure 5, ces entretoises 11 sont disposées dans les quadrangles définissant le bord de la partie supérieure S de la structure selon l'invention.

Une fois que ces cerclages 5, 7, 9 et/ou ces entretoises 11 ont été fixé(e)s sur la structure selon l'invention, cette structure peut conserver sa forme de corolle représentée à la figure 5, sans qu'il soit nécessaire de la relier à un support extérieur.

On notera qu'une autre manière possible de procéder, permettant de s'affranchir de la mise en place des tirants T, est de monter la structure selon l'invention à l'envers, c'est-à-dire de sorte que sa partie évasée S soit posée sur le sol ; une fois les cerclages 5, 7, 9 et les entretoises 11 mis en place, on retourne alors la structure de manière à l'amener dans sa position finale, telle que représentée à la figure 6, c'est-à-dire avec la partie évasée S située vers le haut.

Lorsqu'on souhaite maintenir cette structure en place sur le sol, il suffit de fixer sa base B à l'intérieur d'un socle pondéreux 13, comme cela est représenté à la figure 6, ce socle pouvant être un bloc de béton, ou bien un bac recevant de la terre, par exemple.

Ainsi, sous l'effet du seul poids du socle 13, la structure selon l'invention peut conserver une position verticale, avec le socle 13 posé sur le sol, et la partie supérieure S de cette structure située au-dessus, et à la verticale de ce socle.

Avantageusement, lorsque le socle 13 est un bac recevant de la terre et de l'eau, le gridshell élastique qui le surmonte peut permettre de faire pousser des plantes grimpantes (vigne, bignone, houblon, chèvrefeuille, clématite, fleur de la passion par exemple) prenant racine dans la terre de ce bac et se déployant rapidement sur l'ensemble du gridshell.

Le choix des espèces ainsi que leur disposition se fait en fonction du climat, de l'orientation de la structure et des mesures d'entretien qu'il sera prévu de mettre en oeuvre.

Les plantes sont plantées assez jeunes pour qu'elles puissent d'adapter à leur environnement et croître dans des conditions optimales.

On obtient une couverture végétalisée étendue prenant racine dans un volume réduit et facile d'accès (maintenance aisée).

Il est aussi possible de fixer des bacs végétalisés (plantes annuelles) en hauteur sur la structure.

On obtient ainsi une structure végétalisée, particulièrement esthétique pour réaliser des aménagements urbains dans des environnements fortement minéralisés du fait de la densification et de la grande imperméabilisation des sols qui en découle.

Ce nouvel élément urbain participe donc à la renaturation des villes fortement plébiscitée ces dernières années.

Elle est généralement mise en avant pour combattre les îlots de chaleur urbains qui représentent des élévations localisées des températures du fait de l'absence de végétation.

Cette structure peut en effet être posée à des emplacements choisis en ville, et constituer un élément décoratif, susceptible de se mouvoir de manière déformable, au gré du vent.

Lorsque cette structure est végétalisée, ou bien couverte d'une peau formée par exemple en tissu synthétique ou en matière polymère, elle permet d'obtenir des zones d'ombre, dans lesquelles on peut disposer par exemple des bancs.

La végétation présente aussi l'avantage de rafraîchir au-delà de la simple diminution du bilan radiatif (ombrage), puisqu'elle permet le rafraîchissement de l'air grâce à l'énergie consommée par les plantes (racines et feuilles) via le processus d'évapotranspiration.

On notera par ailleurs que la structure telle que décrite par les figures 4 à 9 présente un caractère iso-radial, c'est-à-dire que tous les quadrangles définissent des surfaces planes, facilitant la mise en place par exemple d'éléments rapportés tels que des panneaux photovoltaïques : dans ce dernier cas, outre ses propriétés esthétiques et d'ombrage, la structure selon l'invention peut constituer un îlot de production d'électricité.

De manière avantageuse, et comme cela est représenté aux figures 8 et 9, plusieurs structures, et dans le l'exemple représenté, trois structures selon l'invention, peuvent être disposées de manière adjacente, et reliées entre elles dans leurs parties supérieures S, de manière à former un ensemble de plus grande superficie, particulièrement esthétique : on peut alors parler d'un bouquet de corolles en gridshell élastiques.

S'il est végétalisé, cet assemblage permet un mélange des espèces (source d'une plus grande biodiversité animale) et la création d'un continuum végétal (trame verte ou pas japonais).

Comme on peut le comprendre à la lumière de la description qui précède, la structure en gridshell élastique selon l'invention peut être mise en oeuvre très simplement à partir d'une préforme tubulaire pouvant aisément être transportée jusqu'au lieu de mise en oeuvre, et ne nécessite aucun aménagement particulier sur le sol, cette tenue étant obtenue grâce au seul poids du socle 13 dans lequel elle est fixée. Un ancrage additionnel est cependant possible pour renforcer la stabilité si nécessaire.

L'emprise au sol de ce socle 13 étant très faible par rapport à l'envergure de la partie supérieure S de la structure selon l'invention, on obtient une structure, qui, bien qu'ayant une grande capacité d'ombrage, n'encombre que très peu l'espace public susceptible d'être parcouru par les passants : cela libère de l'espace par exemple pour la mise en place de bancs.

À titre purement indicatif et non limitatif, une structure en gridshell élastique selon l'invention peut mesurer plusieurs mètres de haut, typiquement entre 3 et 5 mètres.

Bien entendu, la présente invention n'est nullement limitée aux modes de réalisation décrits et représentés.

C'est ainsi par exemple que l'on pourrait conférer à la structure toute ondulation souhaitée, en la déformant de manière différentielle : on obtiendrait alors une structure non axisymétrique. Par exemple un pot à section elliptique et non cylindrique propage une ondulation des bords de la corolle supérieure (comme dans le champignon de type girolle).

A titre d'exemple, on a représenté sur les figures 10 et 11 d'autres formes complexes de gridshell rentrant dans le concept inventif de la présente invention.

Sur la figure 10, on a par exemple représenté une surface quadrinoïde obtenue à partir d'un assemblage de maillage du type de Tchebychev, et sur la figure 11, une surface de Costa: ces formes à corolles multiples peuvent être obtenues à partir d'une préforme refermée tubulaire plus complexe que celle représentée à la figure 3.

## Revendications

1. Structure tridimensionnelle en gridshell élastique présentant une forme tubulaire obtenue à partir de tiges élastiquement déformables (1), reliées entre elles de manière à réaliser un maillage du type de Tchebychev, avec des moyens de liaison entre les tiges (1) du maillage autorisant une variation d'angle sans glissement entre ces tiges (1), ladite structure étant obtenue par déformation du maillage de manière à obtenir une forme évasée en corolle, ladite forme évasée étant maintenue figée sans possibilité de glissement par des moyens sélectionnés dans le groupe comprenant des cerclages (5, 7, 9), des entretoises (11), et des câbles.

2. Groupe de structures selon la revendication 1, ces structures étant reliées entre elles dans leurs zones (S) de plus grande envergure.

3. Ensemble comprenant une structure ou un groupe de structures conformes à l'une des revendications 1 ou 2, présentant chacune une forme s'évasant de sa base (B) vers sa partie supérieure (S), et un bloc (13) dans lequel ladite base (B) est ancrée, le poids de ce bloc (13) étant suffisant pour assurer à lui seul la stabilité de ladite structure par rapport au sol (3).

4. Ensemble selon la revendication 3, dans lequel ledit bloc (13) est un bac contenant de la terre, et ladite structure ou lesdites structures est (sont) recouverte(s) de végétaux prenant racine dans ce bac.

5. Ensemble selon la revendication 4, dans lequel ledit bac comprend des éléments choisis dans le groupe comprenant une réserve d'eau, des capteurs permettant une maintenance connectée, une pompe solaire.

6. Ensemble selon l'une quelconque des revendications 3 à 5, dans lequel ladite structure ou lesdites structures est (sont) recouverte(s) au moins partiellement de plaques choisies dans le groupe comprenant des panneaux photovoltaïques et des toiles formant ombrage.

7. Structure tridimensionnelle selon la revendication 1, comprenant des dispositifs de liaisons des tiges (1), chaque dispositif, comprenant deux noix (2a, 2b) comprenant chacune une bague (21a, 21b) destinée à être collée sur une tige (1a, 1b), et un corps (22a, 22b) monté rotatif autour de cette bague (21a, 21b), les deux noix (2a, 2b) étant par ailleurs montées pivotantes l'une par rapport à l'autre autour d'un axe (A), coupant les axes respectifs (A1 et A2) des bagues (21a, 21b).

8. Procédé de mise en place d'une structure conforme à la revendication 1, dans lequel on apporte ladite préforme tubulaire sur le lieu de mise en oeuvre, puis on applique à cette préforme les déformations permettant d'atteindre la forme évasée finale souhaitée, et dans lequel :
- on relie la partie supérieure (S) de ladite préforme au sol (3) par des tirants de manière à maintenir la forme évasée de la structure pendant la mise en place desdits cerclages (5, 7, 9) et/ou entretoises (11) et/ou câbles,
ou bien
- on appuie ladite préforme tubulaire sur le sol de manière que sa partie évasée (S) soit posée sur le sol (3), puis on met en place lesdits cerclages (5, 7, 9) et/ou entretoises (11) et/ou câbles, puis on retourne la structure de sorte que sa partie évasée (S) soit située vers le haut.

9. Procédé selon la revendication 8, dans lequel on ancre la base (B) de ladite structure à l'intérieur d'un bloc (13) suffisant pour assurer à lui seul la stabilité de la structure par rapport au sol (3), et pouvant être complété par un ancrage léger au sol pour des conditions d'utilisation particulières.

## Patentansprüche

1. Elastische dreidimensionale Gitterschalenstruktur, die eine röhrenförmige Form aufweist, welche auf Grundlage von elastisch verformbaren Stäben (1) erhalten wird, die so miteinander verbunden sind, dass sie ein Netz vom Typ Tschebyscheff bilden, wobei Verbindungsmittel zwischen den Stäben (1) des Netzes eine Winkeländerung ohne Verschiebung zwischen diesen Stäben (1) zulassen, wobei die Struktur durch Verformung des Netzes erhalten wird, um eine kronenförmig aufgeweitete Form zu erhalten, wobei die aufgeweitete Form von Mitteln, ausgewählt aus der Gruppe, die Umreifungen (5, 7, 9), Abstandshalter (11) und Kabel umfasst, ohne Möglichkeit einer Verschiebung starr gehalten wird.

2. Gruppe von Strukturen nach Anspruch 1, wobei diese Strukturen an ihren Bereichen (S) mit größter Ausdehnung miteinander verbunden sind.

3. Anordnung, die eine Struktur oder eine Gruppe von Strukturen nach einem der Ansprüche 1 oder 2, die jeweils eine Form aufweisen, die sich von ihrer Basis (B) zu ihrem oberen Teil (S) hin aufweitet, und einen Block (13) umfasst, in dem die Basis (B) verankert ist, wobei das Gewicht dieses Blocks (13) ausreicht, um für sich alleine die Stabilität der Struktur in Bezug auf den Boden (3) zu gewährleisten.

4. Anordnung nach Anspruch 3, wobei der Block (13) ein Behälter ist, der Erde enthält, und die Struktur oder die Strukturen mit Pflanzen bedeckt sind, die in diesem Behälter Wurzeln schlagen.

5. Anordnung nach Anspruch 4, wobei der Behälter Elemente umfasst, ausgewählt aus der Gruppe, die einen Wasservorrat, Sensoren, die eine vernetzte Wartung ermöglichen, eine Solarpumpe umfasst.

6. Anordnung nach einem der Ansprüche 3 bis 5, wobei die Struktur oder die Strukturen mindestens teilweise mit Platten bedeckt sind, ausgewählt aus der Gruppe, die Photovoltaikpaneele und schattenbildende Tücher umfasst.

7. Dreidimensionale Struktur nach Anspruch 1, die Verbindungsvorrichtungen für die Stäbe (1) umfasst, wobei jede Vorrichtung zwei Nüsse (2a, 2b), die jeweils einen Ring (21a, 21b) umfassen, der dazu bestimmt ist, an einen Stab (1a, 1b) geklebt zu werden, und einen Körper (22a, 22b) umfasst, der drehbar um diesen Ring (21a, 21b) montiert ist, wobei die zwei Nüsse (2a, 2b) darüber hinaus um eine Achse (A), die die jeweiligen Achsen (A1 und A2) der Ringe (21a, 21b) schneidet, zueinander schwenkbar montiert sind.

8. Verfahren zum Errichten einer Struktur nach Anspruch 1, wobei die röhrenförmige Vorform an den Einsatzort gebracht und dann Verformungen auf diese Vorform angewendet werden, die es ermöglichen, die gewünschte endgültige aufgeweitete Form zu erreichen, und wobei:
- der obere Teil (S) der Vorform durch Zugstangen mit dem Boden (3) verbunden wird, um die aufgeweitete Form der Struktur während der Anbringung der Umreifungen (5, 7, 9) und/oder Abstandshalter (11) und/oder Kabel zu halten,
oder
- die röhrenförmige Vorform auf den Boden gedrückt wird, sodass ihr aufgeweiteter Teil (S) auf dem Boden (3) liegt, dann die Umreifungen (5, 7, 9) und/oder Abstandshalter (11) und/oder Kabel angebracht werden und dann die Struktur umgedreht wird, sodass sich ihr aufgeweiteter Teil (S) oben befindet.

9. Verfahren nach Anspruch 8, wobei die Basis (B) der Struktur im Inneren eines Blocks (13) verankert wird, der ausreicht, um für sich alleine die Stabilität der Struktur in Bezug auf den Boden (3) zu gewährleisten, und der für spezielle Verwendungsbedingungen mit einer leichten Verankerung am Boden vervollständigt werden kann.

## Claims

1. Three-dimensional elastic gridshell structure having a tubular shape obtained from elastically deformable rods (1) connected to each other so as to form a Tchebyshev type meshing, with connecting means between the rods (1) of the mesh allowing a variation of angle without slipping between these rods (1), said structure being obtained by deformation of the meshing so as to obtain a flared corolla shape, said flared shape being held by means selected from the group comprising encirclements (5, 7, 9), spacers (11), and cables.

2. A Group of structures according to claim 1, these structures being connected to each other in their larger-span zones (S).

3. An assembly comprising a structure or a group of structures in accordance with one of claims 1 or 2, each having a shape flaring from its base (B) to its upper part (S), and a block (13) in which said base (B) is anchored, the weight of this block (13) being sufficient to ensure on its own stability of said structure with respect to the ground (3).

4. The assembly according to claim 3, wherein said block (13) is a container containing soil, and said structure or structures is (are) covered with plants taking root in this container.

5. The assembly according to claim 4, wherein said container comprises elements chosen from the group comprising a water storage, sensors allowing a connected maintenance, a solar pump.

6. The assembly according to any of claims 3 to 5, wherein said structure or structures is (are) covered at least partially with plates chosen from the group comprising photovoltaic panels and shade cloths.

7. A device for interconnecting rods (1) forming a structure in accordance with any of claims 1 to 3, comprising two yokes (2a, 2b) each comprising a ring (21a, 21b) for being adhered to a rod (1a, 1b), and a body (22a, 22b) rotatably mounted about this ring (21a, 21b), both yokes (2a, 2b) being additionally pivotably mounted with respect to each other about an axis (A), intersecting the respective axes (A1 and A2) of the rings (21a, 21b).

8. A method for setting up a structure in accordance with claim 1, in which said tubular preform is brought to the implementation place, and then deformations for achieving the desired final flared shape are applied to this preform, and in which:
- the upper part (S) is interconnected to said preform on the ground (3) by tie-rods so as to maintain the flared shape of the structure upon setting up said encirclements (5, 7, 9) and/or spacers (11) and/or cables,
or
- said tubular preform is pressed on the ground such that its flared part (S) is laid on the ground (3), and then said encirclements (5, 7, 9) and/or spacers (11) and/or cables are set up, and then the structure is flipped such that its flared part (S) is located upwardly.

9. The method according to claim 8, wherein the base (B) of said structure is anchored inside a block (13) sufficient to ensure on its own stability of the structure with respect to the ground (3), and that can be completed by a light ground anchorage for particular conditions of use.
